# FASCICULE DE BREVET EUROPEEN

(11) **EP 0 487 401 B1**
(45) Date de publication et mention de la délivrance du brevet: **17.01.1996**
(21) Numéro de dépôt: 91403101.8
(22) Date de dépôt: 19.11.1991
(51) Int. Cl.: G05D 23/13

(54) **Procédé et installation d'élaboration d'un débit de gaz**
Verfahren und Vorrichtung zur Herstellung von einem Gasdurchfluss
Method and arrangement for producing a gas flow

(30) Priorité: 21.11.1990 FR 9014492
(43) Date de publication de la demande: 27.05.1992
(73) Titulaire: CARBOXYQUE FRANCAISE, F-92088 Paris La Défence (FR)
(72) Inventeur: Willot, Fabien, F-92310 Sevres (FR); Senckeisen, Jean, F-92150 Suresnes (FR)
(74) Mandataire: Le Moenner, Gabriel

(56) Documents cités:
- EP-A- 0 110 244
- EP-A- 0 239 720
- EP-A- 0 240 780
- CH-A- 353 954
- FR-A- 2 180 714
- PATENT ABSTRACTS OF JAPAN vol. 10, no. 51 (M-457)(2108) 28 Février 1986 & JP- A-60 201 917 ( NIIGATA TEKKOSHO K.K. ) 12 Octobre 1985

## Description

L'invention concerne l'élaboration d'un débit de gaz à une température chaude d'opération, utilisable notamment dans la fabrication d'objets en mousse expansée mettant en oeuvre du gaz carbonique.

Dans ce type d'application, mais également dans de nombreuses autres applications, on doit élaborer un débit de gaz à une température et à une pression qui doivent être très proches d'une température et d'une pression d'opération précise qui peut être la température interne du réacteur dans lequel ce gaz est envoyé. Or, dans les procédés et installations connus, la régulation de ces température et pression est trop imprécise pour satisfaire les exigences opératoires particulièrement fines en ce qui concerne ces deux paramètres.

Le document EP-A-240780 avait proposé un procédé de contrôle de la température d'un fluide utilisé dans la réalisation de tests du type cyclage thermique, pour l'évaluation de composants électriques et électroniques.

La solution proposée consistait alors à séparer, via une vis de répartition, le fluide en deux courants dérivés, le premier étant chauffé, le second étant refroidi à l'aide d'un réfrigérant. Les deux courants sont ensuite remis en un seul courant de fluide qui est dirigé vers la chambre de test. Le fluide subissait, le cas échéant, avant dérivation, une étape de prérefroidissement.

La présente invention a pour objet l'élaboration d'un débit de gaz qui répond aux exigences évoquées plus haut de façon simple et efficace et ce résultat est atteint, dans un procédé selon l'invention, en ce qu'on subdivise un débit de gaz préalablement réchauffé à une température inférieure à la température d'opération en deux courants élémentaires, qui sont ensuite individuellement portés à des températures plus chaudes, dont l'une est supérieure à la température d'opération et dont l'autre est inférieure à la température d'opération, en ce qu'on envoie les courants ainsi différentiellement réchauffées chacun dans une capacité tampon thermiquement isolée, et en ce qu'on prélève, en fonction de la demande, des deux capacités des débits élémentaires de gaz que l'on réunit ensuite en proportion régulée par une vanne mélangeuse à position de mélange commandée par un signal correctif différentiel entre la température effective du gaz élaboré et une valeur de consigne, pour former le débit de gaz à température chaude d'opération. L'expérience montre que cette façon de faire permet une régulation particulièrement fine de la température.

De préférence, la température de consigne est celle effective dans un réacteur d'utilisation, à laquelle est comparée la température du gaz d'opération au voisinage immédiat dudit réacteur, de façon à créer un signal différentiel de correction agissant sur la vanne mélangeuse.

En outre, l'élaboration du débit de gaz sous une pression d'opération s'effectue en portant ledit gaz à pression supérieure à la pression d'opération et en provoquant une détente régulée asservie à un signal différentiel entre la pression effective du gaz détendu et une pression de consigne.

L'invention concerne également une installation d'élaboration d'un débit de gaz à température chaude d'opération comprenant un réservoir de stockage de gaz, un moyen de chauffage d'un débit de gaz associé à un moyen régulateur de température asservi à un comparateur entre la température effective du gaz élaboré et une température de consigne, caractérisée en ce qu'on prévoit un premier moyen de chauffage à température largement inférieure à ladite température d'opération, deux circuits gazeux agencés en parallèle en aval du moyen de chauffage, chacun incorporant un moyen de réchauffage additionnel dont les puissances de chauffe sont différenciées et une capacité-tampon thermiquement isolée, les circuits aboutissant à une vanne mélangeuse régulée, dont la sortie est raccordée à une conduite de distribution du gaz, le moyen régulateur agissant sur la position de réglage de la vanne mélangeuse.

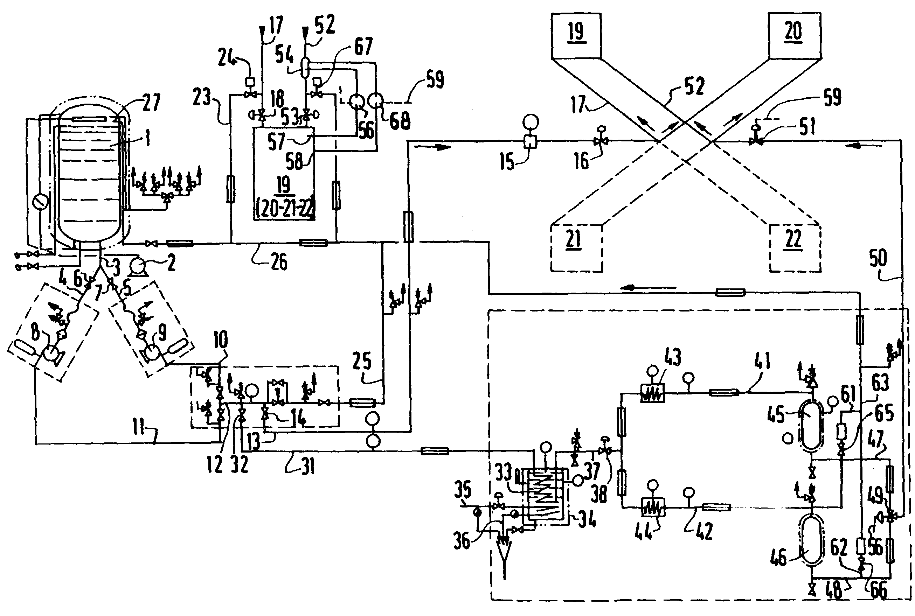

D'autres caractéristiques et avantages de l'invention ressortiront d'ailleurs de la description qui suit en référence au dessin annexé représentant un schéma d'une installation conforme à l'invention.

Sur le dessin, on a représenté une installation de fabrication d'objets en mousse expansée comprenant quatre réacteurs 19, 20, 21, 22, alimentés en gaz carbonique stocké dans un réservoir 1 maintenu à l'état liquide par un groupe frigorifique 2. Une conduite de soutirage de gaz liquide 3 se subdivise en deux conduites élémentaires 4 et 5 incorporant des pompes 8 et 9 délivrant du gaz carbonique sous une pression de l'ordre de 70 bars dans des conduites de refoulement 10 et 11, qui sont ensuite réunies en une conduite unique 12. Cette conduite 12 alimente une conduite de gaz carbonique liquide 13 incorporant une vanne 14, un compteur volumétrique numérique 15, une vanne à ouverture régulée 16 débouchant dans une conduite 17 d'alimentation successive de l'un ou l'autre des réacteurs 19, 20, 21, 22, chacune des canalisations 17 incorporant une vanne 18, en amont de laquelle est branché un circuit de purge 23 à vanne d'arrêt 24 débouchant dans une conduite générale de purge 26 débouchant, en 27, en tête du réservoir 1.

La conduite 12 alimente d'autre part une autre conduite de distribution 31 incorporant une vanne 32, un vaporiseur réchauffeur 34 à serpentin 33, du type à vapeur, délivrant en sortie 37 du gaz carbonique gazeux sous une pression de 70 x 10⁵ Pa à une température de l'ordre de 70°C en amont d'une vanne de sécurité 38, d'où partent deux circuits gazeux agencés en parallèle 41 et 42 chacun incorporant un réchauffeur 43, 44 et, en aval, une capacité-tampon 45 et 46. Des conduites 47 et 48 de soutirage en cuve des capacités-tampons 45 et 46 sont raccordées aux entrées d'une vanne mélangeuse régulée 49 dont la sortie débouche dans une conduite distributrice 50 incorporant un détendeur régulé 51 et délivrant le mélange gazeux ainsi élaboré dans des conduites individuelles 52 vers l'un ou l'autre des réacteurs 19, 20, 21, 22, chaque conduite 52 incorporant un bulbe 54 et une vanne d'arrêt 53, et une vanne de purge 67.

Des conduites de purge 61-62 à vanne 65 et 66 sont prévues en aval des réservoirs 45-46 pour rejoindre la conduite générale de purge 26.

Les réchauffeurs 43 et 44, du type à résistance électrique noyée dans une matrice d'aluminium, ont des puissances électriques différenciées, de façon que le gaz à la sortie du réchauffeur 43 soit à une température plus faible que la température du gaz à la sortie du réchauffeur 44. Par exemple, le gaz dans la conduite 41 et qui est stocké dans le réservoir-tampon 45 est porté à une température d'environ 140°C, tandis que le gaz véhiculé par la conduite 42 et stocké dans la capacité-tampon 46 est porté à une température plus élevée, de l'ordre de 180°C.

Pour maintenir ces températures aussi constantes que possible en fonction du temps et quelque soit le débit de soutirage, on prévoit au niveau de chaque capacité-tampon 45, 46 des conduites de fuite 61, 62 qui débouchent dans une conduite commune de fuite 63 aboutissant à la conduite de purge 26.

La vanne mélangeuse régulée 49 est soumise à l'action d'un régulateur 56 asservi à deux prises de température, une prise de température dans le bulbe 54 et une prise de température 57 dans le réacteur 19 (20-21-22), le tout de façon que la température au niveau du bulbe 54 soit aussi voisine que possible, voire identique à la température 57 dans le réacteur servant de température de consigne.

Le détendeur régulé 51 dans la conduite 50 est lui asservi à un signal transmis en 59 d'un régulateur 68 opérant en fonction de la différence de pression mesurée dans le bulbe 54 et dans le réacteur en 58, de façon à réduire, voire annuler, l'écart de pression entre celle régnant dans le bulbe 54 et celle régnant en 58 dans le réacteur.

L'installation qui vient d'être décrite fonctionne de la façon suivante :
- dans une première phase, on désire envoyer dans un réacteur, par exemple le réacteur 19, un débit de gaz carbonique liquide dont la valeur soit progressivement croissante et dont la quantité totalisée soit bien déterminée. A cet effet, dans un premier laps de temps, on ferme la vanne de purge liquide 24 du réacteur considéré, on ouvre complètement la vanne 16 de contrôle de débit et, après quelques secondes, on ouvre la vanne de purge liquide 24 jusqu'à ce qu'on détecte un passage ininterrompu de liquide pendant un laps de temps de l'ordre de 10 secondes, après quoi, on pré-positionne la vanne régulée 16 à faible ouverture (environ 5 %), on ferme la vanne de purge liquide 4 et on ouvre la vanne de réacteur 18. Un régulateur (non représenté) assure l'ouverture progressive de la vanne 16 jusqu'à un débit maximal souhaité et cela jusqu'à ce que la quantité de liquide envoyée, totalisée par le compteur 15, corresponde à la quantité de liquide qui doit être injectée dans le réacteur. Une fois cette valeur atteinte, on ferme la vanne d'admission liquide 18 et l'on ouvre la vanne de purge 64 ainsi que la vanne de régulation de débit 16.

Cette fourniture dosée de gaz carbonique liquide agissant comme agent expanseur est suivie de la fourniture d'un débit de gaz carbonique gazeux à des température et pression bien précises. Cette fourniture est opérée de la façon suivante : le régulateur 56 assure une position d'ouverture moyenne de la vanne mélangeuse 49. Le régulateur de pression assure la fermeture de la vanne de régulation de pression 51. Après un laps de temps de l'ordre de 2 secondes, la vanne de purge gazeuse 67 est ouverte. Une fois ces préparatifs terminés, on met en oeuvre une régulation de pression selon un point de consigne donné par le régulateur 68 correspondant à une pression différentielle nulle entre la pression régnant en 58 à l'intérieur du réacteur 19 (20-21-22) et la pression de la conduite distributrice de gaz en 54 et cette régulation de pression est maintenue en action jusqu'à la fin du cycle de distribution du gaz. Pendant cette phase, la vanne de purge 67 reste ouverte, après quoi, on met en oeuvre la régulation de température en s'assurant que le régulateur 56 contrôle la vanne mélangeuse 49 de façon à obtenir une température différentielle nulle entre les points de mesure 54, dans la conduite distributrice 52, et 57, dans le réacteur. On ferme alors la vanne de purge 67 et on ouvre la vanne 53 du réacteur pendant la durée de vidange du réacteur.

On ferme ensuite la vanne gaz 53 du réacteur, on ouvre la vanne de purge gaz 67 et, à la fois, on ferme la vanne de régulation de pression 51 et l'on remet en position médiane la vanne mélangeuse 49.

Ainsi qu'il a été décrit, l'invention s'applique en premier lieu aux réacteurs d'utilisation de gaz carbonique gazeux sous pression et température bien précises, mais elle pourrait également s'appliquer à la fourniture de tout autre gaz sous ces mêmes conditions.

## Revendications

1. Procédé d'élaboration d'un débit de gaz à une température chaude d'opération, caractérisé en ce que l'on subdivise un débit de gaz (31) préalablement réchauffé (34) à une température largement inférieure à la température d'opération en deux courants élémentaires (41-42), qui sont ensuite individuellement portés à des températures plus chaudes (43-44), dont l'une est supérieure à la température d'opération et dont l'autre est inférieure à la température d'opération, en ce qu'on envoie les courants ainsi différentiellement réchauffés chacun dans une capacité-tampon thermiquement isolée (45-46) et en ce qu'on prélève des capacités deux débits élémentaires de gaz (47-48) que l'on réunit ensuite en proportion régulée par une vanne mélangeuse (49) à position de mélange commandée par un signal correctif différentiel entre la température effective du gaz élaboré (54) et une valeur de consigne (57), pour former le débit de gaz à température chaude d'opération.

2. Procédé selon la revendication 1, caractérisé en ce que la température de consigne (57) est celle effective dans un réacteur d'utilisation (19-20-21-22), à laquelle est comparée la température du gaz d'opération (54) au voisinage immédiat du réacteur (19-20-21-22), de façon à créer un signal différentiel de correction agissant sur la vanne mélangeuse (49).

3. Procédé selon l'une des revendications 1 ou 2, avec, en outre, élaboration du débit de gaz à la température d'opération sous une pression d'opération, caractérisé en ce que l'on porte le gaz (50) à une pression supérieure à la pression d'opération et en ce qu'on provoque une détente régulée (51) asservie à un signal différentiel entre la pression effective du gaz détendu (54) et une pression de consigne (58).

4. Procédé selon l'une des revendications 1 à 3, caractérisé en ce que l'on assure, en aval de chaque capacité-tampon (45-46), un débit de fuite (61-62) compensateur des pertes thermiques.

5. Procédé de fabrication d'objets en mousse expansée mettant en oeuvre un débit de gaz carbonique à l'état liquide en tant qu'agent expanseur de produit mousse et un débit de gaz carbonique à l'état gazeux en tant qu'agent moteur, à une température d'opération très voisine de la température du réacteur en fin d'opération d'expansion, caractérisé en ce qu'on porte sous pression un débit global de gaz carbonique liquide soutiré d'un réservoir de stockage (1), en ce qu'on utilise ce débit (12) d'abord et principalement à titre de débit de gaz liquide expanseur (13) de valeur croissante dans une première phase opératoire, ensuite à titre de gaz moteur (31) dans une seconde phase opératoire au cours de laquelle on vaporise et réchauffe partiellement (34) le gaz carbonique liquide sous pression, après quoi on subdivise le débit de gaz partiellement réchauffé en deux courants élémentaires (41-42), qui sont individuellement portés à des températures plus chaudes (43-44) dont l'une est supérieure à la température d'opération et dont l'autre est inférieure à la température d'opération, en ce qu'on envoie les courants ainsi différentiellement réchauffés (41-42) chacun dans une capacité-tampon thermiquement isolée (45-46), et en ce qu'on prélève des capacités deux débits élémentaires de gaz (47-48) que l'on réunit ensuite en proportion régulée par une vanne mélangeuse (49) à position de mélange commandée (56) par un signal correctif différentiel entre la température effective du gaz (54) et une valeur de consigne (57) pour former le débit de gaz à température d'opération (50).

6. Procédé selon la revendication 5, caractérisé en ce que la température de consigne (57) est celle effective dans un réacteur de fabrication de mousse expansée (19-20-21-22), à laquelle est comparée la température du gaz d'opération (54) au voisinage du réacteur, de façon à créer un signal différentiel de correction agissant sur la vanne mélangeuse (49).

7. Procédé selon l'une des revendications 5 ou 6 avec, en outre, élaboration du débit de gaz à température d'opération (50) sous une pression d'opération, caractérisé en ce que l'on porte (8-9) le gaz à une pression supérieure à la pression d'opération et en ce qu'on provoque une détente régulée (51) de ce gaz en aval de la vanne mélangeuse régulée (49), la détente (51) étant asservie à une pression de consigne (58) qui est celle régnant dans le réacteur.

8. Procédé selon l'une des revendications 5 à 7, caractérisé en ce que l'on assure, en aval de chaque capacité-tampon (45-46), un débit de fuite (61-62) compensateur des pertes thermiques.

9. Installation d'élaboration d'un débit de gaz à température d'opération, destinée à la mise en oeuvre du procédé selon l'une des revendications 1 à 4, comprenant un réservoir de stockage de gaz (1), un moyen de réchauffage (34-43-44) d'un débit de gaz associé à un moyen régulateur de température asservi à un comparateur (56) entre la température effective du gaz élaboré (54) et une température de consigne (57), caractérisée en ce qu'elle comporte, en aval du réservoir (1), un premier moyen (34) de chauffage du gaz à température largement inférieure à la température d'opération, deux circuits de gaz (41-42) agencés en parallèle à la sortie du premier moyen de chauffage (34), chacun incorporant un moyen de réchauffage additionnel (43-44) dont les puissances de chauffe sont différenciées et une capacité-tampon thermiquement isolée (45-46), les circuits (41-42) aboutissant à une vanne mélangeuse régulée (49) dont la sortie est raccordée à une conduite de distribution du gaz (50), le moyen régulateur (56) agissant sur la position de réglage de la vanne mélangeuse (49).

10. Installation selon la revendication 9, caractérisée en ce qu'elle comprend un moyen de détente (51) en aval de la vanne mélangeuse régulée (49), associé à un moyen régulateur de pression (59) asservi à un comparateur entre la pression du gaz détendu (54) et une valeur de consigne (58).

11. Installation selon l'une des revendications 9 ou 10, caractérisée par une conduite de fuite (61-62) branchée entre chaque capacité- tampon (45-46) et le réservoir de stockage (1).

12. Installation de fabrication d'objets en mousse expansée destinée à la mise en oeuvre du procédé selon l'une des revendications 5 à 8, comprenant un réacteur d'expansion (19-20-21- 22), un réservoir de gaz carbonique (1) maintenu à l'état liquide, avec un moyen de pompage (8-9) de gaz liquide sous pression vers un moyen de distribution de gaz carbonique liquide dans le réacteur (19-20-21-22), et des moyens de distribution de gaz carbonique gazeux chaud vers le réacteur (19-20-21-22), incorporant un vaporiseur-réchauffeur (34), caractérisée par deux circuits gazeux (41-42) agencés en parallèle à la sortie du vaporiseur-réchauffeur (34), chacun incorporant un moyen de réchauffage additionnel (43-44) dont les puissances de chauffe sont différenciées, et une capacité-tampon thermiquement isolée (45-46), une vanne mélangeuse régulée (49) dont les entrées sont raccordées respectivement aux sorties des capacités-tampons (45-46), et dont la sortie est raccordée à une conduite de distribution du gaz (50), et un moyen régulateur (56) agissant sur la vanne mélangeuse (49) et asservi à un comparateur de température effective du gaz élaboré parvenant au réacteur (54) et la température propre du réacteur (58).

## Patentansprüche

1. Verfahren zur Erzeugung einer auf eine erhöhte Betriebstemperatur erwärmten Gasströmung, dadurch gekennzeichnet, daß eine zuvor auf eine Temperatur weit unterhalb der Betriebstemperatur erwärmte (34) Gasströmung (31) in zwei Elementarströme (41-42) unterteilt wird, die sodann einzeln auf höhere Temperaturen (43-44) gebracht werden, deren eine größer ist als die Betriebstemperatur und deren andere kleiner ist als die Betriebstemperatur, daß jeder der infolgedessen unterschiedlich erwärmten Ströme in ein thermisch isoliertes Puffervolumen (45-46) geleitet wird, und daß aus den Volumina zwei elementare Gasströmungen (47-48) entnommen werden, die dann mittels eines Mischventils (49), dessen Mischereinstellung durch ein der Differenz zwischen der tatsächlichen Temperatur des erzeugten Gases (54) und einem Sollwert (57) entsprechendes Korrektursignal gesteuert wird, in einem gesteuerten Verhältnis wieder zusammengeführt werden, um die auf die Betriebstemperatur erwärmte Gasströmung zu bilden.

2. Verfahren nach Anspruch 1, dadurch gekennzeichnet, daß die Solltemperatur (57) die in einem Anwendungsreaktor (19-20-21-22) herrschende Temperatur ist, mit der die Temperatur des Betriebsgases (54) in unmittelbarer Nähe des Reaktors (19-20-21-22) verglichen wird, um ein auf das Mischventil (49) einwirkendes Differenz-Korrektursignal zu bilden.

3. Verfahren nach einem der Ansprüche 1 oder 2, bei dem die auf die Betriebstemperatur erwärmte Gasströmung außerdem unter einem Betriebsdruck erzeugt wird, dadurch gekennzeichnet, daß das Gas (50) auf einen Druck größer als der Betriebsdruck gebracht wird, und daß eine gesteuerte, von einem der Differenz zwischen dem tatsächlichen Druck des entspannten Gases (54) und einem Solldruck (58) entsprechenden Signal abhängige Entspannung (51) herbeigeführt wird.

4. Verfahren nach einem der Anspüche 1 bis 3, dadurch gekennzeichnet, daß stromab jedes Puffervolumens (45-46) eine die thermischen Verluste ausgleichende Leckströmung (61-62) erzeugt wird.

5. Verfahren zur Herstellung von Gegenständen aus expandiertem Schaum unter Verwendung einer kohlensauren Gasströmung in flüssigem Zustand als Expansionsmittel und einer kohlensauren Gasströmung in gasförmigem Zustand als Treibmittel bei einer Betriebstemperatur, die sehr nahe bei der Reaktortemperatur am Ende des Expansionsvorgangs liegt, dadurch gekennzeichnet, daß eine aus einem Speicherbehälter (1) entnommene Gesamtströmung flüssigen kohlensauren Gases komprimiert wird, daß diese Strömung (12) in einer ersten Betriebsphase zuerst und vorwiegend als flüssige Expansionsgasströmung (13) mit zunehmendem Betrag, dann in einer zweiten Betriebsphase, im Verlauf derer das unter Druck stehende flüssige kohlensaure Gas teilweise verdampft und erwärmt (34) wird, als Treibgas (31) verwendet wird, wonach die teilweise erwärmte Gasströmung in zwei Elementarströme (41-42) unterteilt wird, die einzeln auf höhere Temperaturen (43-44) gebracht werden, deren eine größer ist als die Betriebstemperatur und deren andere kleiner ist als die Betriebstemperatur, daß jeder der infolgedessen einzeln erwärmten Ströme (41-42) in ein thermisch isoliertes Puffervolumen (45-46) geleitet wird, und daß aus den Volumina zwei elementare Gasströmungen (47-48) entnommen werden, die dann mittels eines Mischventils (49), dessen Mischereinstellung durch ein der Differenz zwischen der tatsächlichen Temperatur des erzeugten Gases (54) und einem Sollwert (57) entsprechendes Korrektursignal gesteuert wird, in einem gesteuerten Verhältnis wieder zusammengeführt werden, um die Gasströmung mit der Betriebstemperatur zu bilden.

6. Verfahren nach Anspruch 5, dadurch gekennzeichnet, daß die Solltemperatur (57) die in einem Reaktor (19-20-21-22) zur Herstellung expandierten Schaums herrschende Temperatur ist, mit der die Temperatur des Betriebsgases (54) in unmittelbarer Nähe des Reaktors (19-20-21-22) verglichen wird, um ein auf das Mischventil (49) einwirkendes Korrektur-Differenzsignal zu bilden.

7. Verfahren nach einem der Ansprüche 5 oder 6, bei dem die auf die Betriebstemperatur erwärmte Gasströmung außerdem unter einem Betriebsdruck erzeugt wird, dadurch gekennzeichnet, daß das Gas (50) auf einen Druck größer als der Betriebsdruck gebracht wird, und daß eine gesteuerte Entspannung (51) dieses Gases stromab des gesteuerten Mischventils herbeigeführt wird, wobei die Entspannung (51) von einem in dem Reaktor herrschenden Solldruck (58) abhängig ist.

8. Verfahren nach einem der Anspüche 5 bis 7, dadurch gekennzeichnet, daß stromab jedes Puffervolumens (45-46) ein die thermischen Verluste ausgleichender Leckstrom (61-62) erzeugt wird.

9. Vorrichtung zur Erzeugung einer auf Betriebstemperatur erwärmten Gasströmung zur Anwendung des Verfahrens nach einem der Ansprüche 1 bis 4, umfassend einen Gasspeicherbehälter (1), ein Mittel (34-43-44) zum Erwärmen einer Gasströmung, welches einem von einem die tatsächliche Temperatur des erzeugten Gases (54) und eine Solltemperatur (57) vergleichenden Vergleicher (56) abhängigen Temperatursteuermittel zugeordnet ist, dadurch gekennzeichnet, daß die Vorrichtung stromab des Behälters (1) ein erstes Mittel (34) zum Erwärmen des Gases auf eine Temperatur weit unterhalb der Betriebstemperatur und zwei am Ausgang des ersten Heizmittels (34) parallel angeordnete Gaskreise (41-42), deren jeder ein zusätzliches Heizmittel (43-44) mit jeweils unterschiedlichen Heizleistungen sowie ein thermisch isoliertes Puffervolumen (45-46) enthält, umfaßt, wobei die Kreise (41-42) in ein gesteuertes Mischventil (49) münden, dessen Ausgang mit einer Gasverteilerleitung (50) verbunden ist, und wobei das Steuermittel (56) auf die Steuerstellung des Mischventils (49) einwirkt.

10. Vorrichtung nach Anspruch 9, gekennzeichnet durch ein Mittel zur Entspannung (51) stromab des gesteuerten Mischventils (49), welches einem von einem den Druck des entspannten Gases (54) und einen Sollwert (58) vergleichenden Vergleicher abhängigen Drucksteuermittel (59) zugeordnet ist.

11. Vorrichtung nach einem der Ansprüche 9 oder 10, gekennzeichnet durch eine zwischen jedem Puffervolumen (45-46) und dem Speicherbehälter (1) verzweigte Leckleitung (61-62).

12. Vorrichtung zur Herstellung von Gegenständen aus expandiertem Schaum nach dem Verfahren nach einem der Ansprüche 5 bis 8, umfassend einen Expansionsreaktor (19-20-21-22), einen Behälter (1) für in flüssigem Zustand gehaltenes kohlensaures Gas, ein Mittel zum Pumpen (8-9) flüssigen Gases unter Druck zu einem Verteilermittel für flüssiges kohlensaures Gas in dem Reaktor (19-20-21-22), und Verteilermittel für warmes gasförmiges kohlensaures Gas in den Reaktor (19-20-21-22), enthaltend einen
Verdampfer-Erwärmer (34), gekennzeichnet durch zwei parallel zu dem Ausgang des Verdampfer-Erwärmers (43-44) angeordnete Gaskreise (41-42), deren jeder ein zusätzliches Heizmittel (43-44) mit jewelis unterschiedlichen Heizleistungen sowie ein thermisch isoliertes Puffervolumen (45-46) enthält, ein gesteuertes Mischventil (49), dessen Eingänge mit den jeweiligen Ausgängen der Puffervolumina (45-46) verbunden sind, und dessen Ausgang mit einer Gasverteilerleitung (50) verbunden ist, und ein Steuermittel (56), welches auf das Mischventil (49) einwirkt und von einem Vergleicher für die tatsächliche Temperatur des an dem Reaktor ankommenden erzeugten Gases (54) und der Eigentemperatur des Reaktors (58) abhängig ist.

## Claims

1. Method for producing a flow of gas at a hot operating temperature, characterised in that a flow of gas (31) previously heated (34) to a temperature considerably lower than the operating temperature is subdivided into two elementary streams (41-42), which are then individually raised to hotter temperatures (43-44), one of which is higher than the operating temperature and the other one of which is lower than the operating temperature, in that the streams thus differentially reheated are each sent into a thermally insulated buffer tank (45-46) and in that two elementary gas flows (47-48) are taken from the tanks and then combined in a proportion regulated by a mixer valve (49) with a mixing position controlled by a differential correction signal between the actual temperature of the gas produced (54) and a set value (57), in order to form the flow of gas at the hot operating temperature.

2. Method according to Claim 1, characterised in that the set temperature (57) is the one effective in an operating reactor (19-20-21-22), with which the temperature of the operating gas (54) in the immediate vicinity of the reactor (19-20-21-22) is compared, so as to create a differential correction signal acting on the mixer valve (49).

3. Method according to one of Claims 1 or 2, with, in addition, production of the flow of gas at the operating temperature and at an operating pressure, characterised in that the gas (50) is raised to a pressure greater than the operating pressure and in that a regulated depressurisation (51) is brought about, slaved to a differential signal between the actual pressure of the depressurised gas (54) and a set pressure (58).

4. Method according to one of Claims 1 to 3, characterised in that, downstream of each buffer tank (45-46), an escape flow (61-62) is provided, compensating for heat losses.

5. Method for manufacturing expanded-foam objects using a flow of carbon dioxide in the liquid state as an agent for expanding the foam product and a flow of carbon dioxide in the gaseous state as a propellent, at an operating temperature very close to the temperature of the reactor at the end of the expansion operation, characterised in that a total flow of liquid carbon dioxide drawn from a storage reservoir (1) is pressurised, in that this flow (12) is first and foremost used as a flow of liquid expansion gas (13) of increasing value in a first operating phase, then as a propellent gas (31) in a second operating phase in the course of which the pressurised liquid carbon dioxide is vaporised and partially heated (34), after which the partially heated gas flow is subdivided into two elementary streams (41-42), which are individually raised to hotter temperatures (43-44), one of which is higher than the operating temperature and the other one of which is lower than the operating temperature, in that the streams thus differentially heated (41-42) are each fed into a thermally insulated buffer tank (45-46), in that two elementary gas flows (47-48) are taken from the tanks and then combined in a proportion regulated by a mixer valve (49) with a mixing position controlled (56) by a differential correction signal between the actual temperature of the gas (54) and a set value (57) in order to form the gas flow at the operating temperature (50).

6. Method according to Claim 5, characterised in that the set temperature (57) is the one effective in a reactor for manufacturing expanded foam (19-20-21-22), with which the temperature of the operating gas (54) in the vicinity of the reactor is compared, so as to create a differential correction signal acting on the mixer valve (49).

7. Method according to one of Claims 5 or 6 with, in addition, production of the gas flow at the operating temperature (50) and at an operating pressure, characterised in that the gas is raised (8-9) to a pressure greater than the operating pressure and in that a regulated depressurisation (51) of this gas is brought about downstream of the regulated mixer valve (49), the depressurisation (51) being slaved to a set pressure (58), which is the one prevailing in the reactor.

8. Method according to one of Claims 5 to 7, characterised in that, downstream of each buffer tank (45-46), an escape flow (61-62) is provided, compensating for heat losses.

9. Installation for producing a flow of gas at an operating temperature, designed to implement the method according to one of Claims 1 to 4, comprising a gas storage reservoir (1), a means (34-43-44) for heating a flow of gas associated with a temperature regulation means slaved to a comparator (56) between the actual temperature of the gas produced (54) and a set temperature (57), characterised in that it includes, downstream of the reservoir (1), a first means (34) of heating the gas to a temperature considerably lower than the operating temperature, two gas circuits (41-42) arranged in parallel at the outlet from the first heating means (34), each incorporating an additional heating means (43-44), the heating capacities of which are differentiated, and a thermally insulated buffer tank (45-46), the circuits (41-42) ending in a regulated mixer valve (49), the outlet of which is connected to a pipe for distributing the gas (50), the regulation means (56) acting on the regulation position of the mixer valve (49).

10. Installation according to Claim 9, characterised in that it comprises a depressurisation means (51) downstream of the regulated mixer valve (49), associated with a pressure regulating means (59) slaved to a comparator between the pressure of the depressurised gas (54) and a set value (58).

11. Installation according to one of Claims 9 or 10, characterised by an escape pipe (61-62) connected between each buffer tank (45-46) and the storage reservoir (1).

12. Installation for manufacturing expanded-foam objects designed for implementing the method according to one of Claims 5 to 8, comprising an expansion reactor (19-20-21-22), a reservoir of carbon dioxide (1) maintained in the liquid state, with a means (8-9) for pumping pressurised liquid gas to a means for distributing liquid carbon dioxide in the reactor (19-20-21-22), and means for distributing hot gaseous carbon dioxide to the reactor (19-20-21-22), incorporating a vaporiser/heater (34), characterised by two gas circuits (41-42) arranged in parallel at the outlet from the vaporiser/heater (34), each incorporating an additional heating means (43-44), the heating capacities of which are differentiated, and a thermally insulated buffer tank (45-46), a regulated mixer valve (49), the inlets of which are connected respectively to the outlets of the buffer tanks (45-46) and the outlet of which is connected to a pipe for distributing the gas (50), and a regulation means (56) acting on the mixer valve (49) and slaved to a comparator for the actual temperature of the gas produced which reaches the reactor (54) and the inherent temperature of the reactor (58).
